# EUROPEAN PATENT SPECIFICATION

(11) **EP 3 071 755 B1**
(45) Date of publication and mention of the grant of the patent: **07.09.2022**
(21) Application number: 14861377.1
(22) Date of filing: 18.11.2014
(51) Int. Cl.: E02B 9/08, E02B 17/02, F03B 13/12, F03D 9/00, B63B 35/44

(54) **POWER PLATFORM**
ENERGIEPLATTFORM
PLATE-FORME GÉNÉRATRICE

(30) Priority: 18.11.2013 AU 2013904441
(43) Date of publication of application: 28.09.2016
(73) Proprietor: Envirotek Pte Ltd, Singapore 149544 (SG)
(72) Inventor: QUINN, Eoghan Eugene, Port Melbourne, Victoria 3207 (AU); CHENG, Jefferson Gaw, Sydney, New South Wales 2000 (AU)
(74) Representative: FRKelly
(86) International application number: PCT/AU2014/001053
(87) International publication number: WO 2015/070282

(56) References cited:
- WO-A1-2011/075795
- DE-A1- 2 537 836
- GB-A- 2 365 385
- GB-A- 2 365 385
- GB-A- 2 383 978
- GB-A- 2 477 872
- US-A1- 2004 253 060
- US-A1- 2004 253 060
- US-A1- 2010 025 996
- US-A1- 2012 248 776

## Description

### TECHNICAL FIELD

The present invention relates to the field of offshore platforms. Specifically the invention relates to offshore platforms configured to harness natural energy and convert the same into electrical power.

### BACKGROUND

An oscillating water column (OWC) device uses a large volume of moving water as a piston in a cylinder to force air out of the column as a wave rises; conversely, fresh air is drawn into the column as the wave falls. This movement of air in and out of the column is used to turn a bi-directional turbine such as a wells turbine disposed at the top of the column. The rotation energy from the turbine is then used to generate electrical power which is conveyed by a transmission line to shore.

Such devices are typically constructed, installed or deployed along steep shorelines, even into the faces of cliffs or offshore environments and estuaries, where the difference in height between wave crests and wave troughs is pronounced. This facilitates higher energy production from a wave as the gravitational potential energy of the wave is maximised. It will be appreciated; however, that such locations pose numerous installation difficulties. These difficulties range from the increased costs and complexity of installing and running such a facility to the damage of coastal sites that may face opposition from environmentalists.

US 2010/025996 discloses a power generating platform having a platform body provided with a plurality of oscillating water columns disposed about the platform body and equidistantly spaced about the platform in a closed loop configuration.

GB 2365385 teaches an offshore structure comprises a cellular concrete base means supporting a number of wind turbines, oscillating water column systems and tidal current power generation units adapted to extract wind, wave and tidal current energy. The power platform has a selectively variable buoyancy to sink the platform in water to the sea bed.

US 2004/253060 teaches a semi-submersible, multicolumn, floating off-shore oil and gas drilling platform having an adjustably buoyant base and a plurality of vertically upstanding columns therefrom.

WO 2011/075795 teaches an offshore platform configured to support a plurality of ducts for receiving an oscillating ware column to drive an energy extraction module.

It is against this background and the problems and difficulties associated therewith that the present invention has been developed. Various types of devices are used to convert natural energy for example, solar, wind, wave, tidal etc. However, it is always desirable to design new devices to address or ameliorate the drawbacks described above.

Any discussion of documents, acts, materials, devices, articles or the like which has been included in the present specification is not to be taken as an admission that any or all of these matters form part of the prior art base or were common general knowledge in the field relevant to the present invention as it existed before the priority date of each claim of this application.

### SUMMARY

In accordance with the invention, a power platform for generating electricity is provided, the platform comprising a platform body supporting a device for generating electricity from water energy, wherein the power platform has a selectively variable buoyancy to sink the platform in water, the device comprising a plurality of oscillating water columns disposed about the platform body and equidistantly spaced about the platform in a closed loop configuration with a distance of between half to one-and-a-half oscillating water columns spacing therebetween, the platform body being manufactured from a framework to allow the passage of waves through sides and lower portion of the platform body.

The device may further comprise at least one tidal turbine, suspended below the water level, to generate electricity from tidal energy.

The selectively variable buoyancy may enable the power platform to self-float.

The platform body may supports six oscillating water columns equidistantly spaced about the periphery of the platform.

The platform body may further comprise a mount for receiving a mounting member of an oscillating water column. The mount of the platform body may be permanently affixed to a mounting member of an oscillating water column.

Each support may comprise a ballast chamber. Sea water may be used to fill the ballast chamber. The ballast chamber of each of the plurality of supports may have sufficient volume to lower the platform to sit upon the seafloor.

A lower portion of each support may be trapezoidal in side sectional view. The lower portion of each support may comprise an outer framework and a series of reinforcing members disposed about the ballast chamber. The plurality of supports may not be of equal volume.

In a preferred embodiment, there is provided a device for generating electricity from wave energy, the device comprising an oscillating water column associated with a turbine that generates electricity from flow of air in the oscillating water column, the oscillating water column having a housing surrounding a cavity therein, the housing having a lower inlet for receiving waves into and out of the cavity and an aperture, the aperture providing for ingress and egress of air sucked into and forced out of the cavity.

The power platform may further comprise a barrier for minimising erosion of the supports of the platform when the platform is submerged in water.

In some embodiments the power platform may further comprise a wind turbine. The electricity generated from water energy and the power generated from the wind turbine may be collectively integrated into a single electrical output. The single electrical output may be fed to a cable that transmits the power generated from the platform to another site.

Also described is a system of power platforms for generating electricity from wave energy, the system comprising: a plurality of power platforms as described above; and a network of power transmission lines connecting each power platform to at least one other power platform. The system may further comprise a power transmission line connected to another site. The other site may be a vessel, a power plant on shore, or an offshore rig.

The system of power platforms may be electrically interconnected by electrical power transmission lines, wherein from at least one power platform there extends a main electrical power transmission line for transmitting electrical power developed by all of the platforms to a shore.

The plurality of power platforms may be electrically connected in series to each other and to the main electrical power transmission line to shore. Alternatively, the plurality of power platforms may comprise a main platform from which there extends a main electrical power transmission line extending to shore, and each of the remainder of the plurality of power platforms is electrically connected to the main platform.

Furthermore described a method of assembling and installing a power platform, the method comprising the steps of: supporting the power platform body above a body of water; connecting supports in the body of water to the platform body by connecting an upper portion of each support to the platform body above the water level; and ballasting a lower portion of each support to sink the supports of the power platform below the water.

The method may further comprise the step of attaching an OWC to the power platform body after the platform body is connected to the upper portion of each support. The method may comprise transporting the assembled power platform body in the body of water to an installation site, before ballasting the lower portion of each of the supports. The method may comprise transporting the power platform body on a barge to an installation site, and supporting the power platform body on the barge prior to connection to the upper portion of each support. The method may comprise raising and lowering the barge relative to the water level of the body of water to remove the platform from the barge. The method may comprise welding the upper portion of each support to the power platform body.

Additionally described is a device for generating electricity from wave energy, the device comprising an oscillating water column having a housing surrounding a cavity therein, the housing having a lower inlet for receiving waves into and out of the cavity and an aperture, the aperture providing for ingress and egress of air sucked into and forced out of the housing, the aperture being in fluid communication with a bi-directional turbine that generates electricity from the flow of air in the cavity, wherein the lower inlet is partially bounded by a shroud for funnelling water into the inlet.

The housing may comprise a mounting member for supporting the oscillating water column from a power platform. The shroud may be configured to flare outwardly from the inlet such that the shroud funnels waves into the cavity of the oscillating water column thereby amplifying the electricity generated from the device. The shroud may extend from a side of the OWC farthest from an oncoming wave direction. The shroud may extend beyond the draft of the housing towards the sea floor. The shroud may extend below the inlet to a depth between one and three times the depth of the draft of the housing.

A portion of the shroud may be angled towards the oncoming wave direction. The portion of the shroud may be angled at an inclination of 50 to 70 degrees to the oncoming wave direction.

A volume of the cavity as a ratio to an area of the inlet may be about 1:5.

A volume of the cavity as a ratio to an area of the aperture may be between 300:1 and 600:1.

The ratio of the area of the inlet of the housing, to the area of the aperture of the housing may be 100:1.

Also described is a scour prevention skirt for a power platform, the skirt comprising: a holding membrane adjustably connected to a support of the platform, the membrane extending at least part way around a lower portion of the support of the platform, the membrane forming an envelope configured to hold a coarse particulate material, such that once the power platform is lowered to a resting position on the sea floor, the membrane is released from the support and the course particulate material falls to the sea floor about the lower portion of the support to act as a scour prevention.

The coarse particulate material may be selected from rocks, stone, crushed rock, gravel or combinations thereof. The holding membrane may depend from the support, being releasably suspended therefrom.

Furthermore described is a device for generating electricity from wave energy, the device comprising an oscillating water column having a housing surrounding a cavity therein, the housing having a lower inlet for receiving waves into and out of the cavity and an aperture, the aperture providing for ingress and egress of air sucked into and forced out of the housing, the aperture being in fluid communication with a bi-directional turbine, wherein the lower inlet is partially bounded by a shroud for funnelling water into the inlet.

A detailed description of embodiments of the invention is provided below along with accompanying figures that illustrate by way of example the principles of the invention. While the invention is described in connection with such embodiments, it should be understood that the invention is not limited to any embodiment. On the contrary, the scope of the invention is limited only by the appended claims and the invention encompasses numerous alternatives, modifications and equivalents. For the purpose of example, numerous specific details are set forth in the following description in order to provide a thorough understanding of the present inventionclaims.

### BRIEF DESCRIPTION OF THE DRAWINGS

Embodiments of the invention are illustrated by way of example, and not by way of limitation, with reference to the accompanying drawings, in which:
Figure 1 is an isometric view of a power platform, according to a first embodiment of the invention;
Figure 1A is an isometric wire frame view of the power platform, illustrating the location of a wind turbine and 6 oscillating water columns (OWC) on a body of the platform;
Figure 2 is a plan view of the offshore platform of Figure 1, having three legs positioned equidistantly around the periphery of the platform body;
Figure 2A is plan view of the offshore platform of Figure 2, having water turbines for generating electricity from water energy in place of oscillating water columns;
Figure 3 is an end view of the offshore platform of Figure 1, illustrating the greater volume of a primary leg located under the wind turbine;
Figure 3A is an end view of the offshore platform of Figure 2A, illustrating the water turbines located below platform in the water;
Figure 4 is a side view of the offshore platform of Figure 1;
Figure 5 is a side view of a support from Figure 1;
Figure 6A is a plan view of a primary support of Figure 1;
Figure 6B is a sectional isometric view of the support of Figure 5, illustrating the support structure of the chamber;
Figure 7A is an isometric view of a secondary support of the offshore platform of Figure 1;
Figure 7B is an isometric wireframe view plan of the support of Figure 7A;
Figure 8 is a top isometric view of an OWC;
Figure 9 is a left side elevation of the OWC of Fig 8;
Figure 10 is a front elevation of the OWC of Fig 8;
Figure 11 is a plan view of the OWC of Fig 8;
Figure 12 is a side view of an OWC illustrating the orientation of a wave inlet in relation to the direction of oncoming waves;
Figure 13 is a perspective view of an OWC's having a shroud that extends towards the sea floor around the wave inlet;
Figure 14 is a perspective view of an OWC having a shroud inclined towards an oncoming wave direction;
Figure 15 is a perspective view of an OWC having a steeply inclined shroud with a lesser draft than the shroud of Figure 14;
Figure 16 illustrates a perspective view, in wire frame, of an OWC mount comprising a pair of cooperating brackets;
Figure 17 illustrates in side view the relative attachment configurations of an upper and lower OWC mount to a platform body; and
Figure 18 is a front view of an OWC having four mounts to the platform body, each mount located in proximity to a cross-brace of the body;
Figures 19A to 19E are schematic plan views of differing spatial relationships between a plurality of OWCs;
Figure 20 is a schematic illustration in plan view of a barge transporting the power platform of Figure 1, in a partially disassembled state;
Figure 21 is a schematic illustration in plan view of a dockside arrangement of the barge and power platform components, prior to assembly to the power platform;
Figure 22 is schematic illustration of the platform in side view, illustrating a crane for assembling a wind turbine to the platform;
Figure 23 is a schematic illustration in side view of the platform being aligned with support structures while supported on a barge;
Figures 24 is a schematic illustration in side view of the platform of Figure 1 still supported on the barge, being attached to a plurality of support structures;
Figure 25 is a schematic illustration in side view of the platform floating above the barge;
Figure 26 is a schematic illustration in side view of the platform floating and ready for towing to the installation site;
Figure 27 is a schematic illustration in side view of the platform at the installation site, the supports seated on the sea floor;
Figure 28 is a detailed view of a support of the power platform of Figure 1, illustrating a scour prevention barrier about a lower portion of the support;
Figure 29 is a detailed view of the support of Figure 28 sunk (by flooding of ballast tanks) to be seated on the seafloor;
Figure 30 is a side view of a diver deploying a scour prevention barrier;
Figure 31 is a view of the deployed scour prevention barrier around the support of the platform;
Figure 32 is a side view of the platform of Fig 1 in location on the sea floor with scour protection deployed about each support;
Figure 33 is an illustration of seabed erosion around a support without scour protection;
Figure 34 is an illustration of a scour prevention barrier deployed around a primary and a secondary support of the platform;
Figure 35 is a schematic view of a first arrangement of a plurality of power platforms, where each platform is connected to a primary platform, the primary platform configured to deliver power to shore; and
Figure 36 is a schematic view of a plurality of power platforms, where the platforms are arranged in series.

In the following description, like reference characters designate like or corresponding parts throughout the several views of the drawings.

### DETAILED DESCRIPTION

The present invention will now be described more fully hereinafter with reference to the accompanying drawings, in which various embodiments of the invention are shown. The invention may be embodied in many different forms and should not be construed as limited to the embodiments set forth herein.

The term 'water energy' used herein means energy derived from the movement of water and includes forms of water energy such as wave energy and tidal energy.

Wave energy is derived from kinetic energy and gravitational potential energy. Both of these energy sources impart energy into a wave which can then be harvested or converted by a turbine into usable, transportable, clean electrical power. References in the specification to "wave energy" are intended to encompass both kinetic energy and potential energy.

Power derived from tidal energy is generated through the movement of water through tidal forces due to gravitational pull of water by the moon and the sun. The devices generating electricity through tidal flows harness energy from the kinetic and/or potential energy of water flowing through the movement of tides.

It is intended that all references in this specification to "waves" are intended to encompass waves out at sea, or waves created by tides. The term "waves" is also intended to encompass wind waves formed along a shore where the wave is created by the combined forces of the wind and water movement and variation in sea depth, as the depth of the sea floor varies.

### General Description

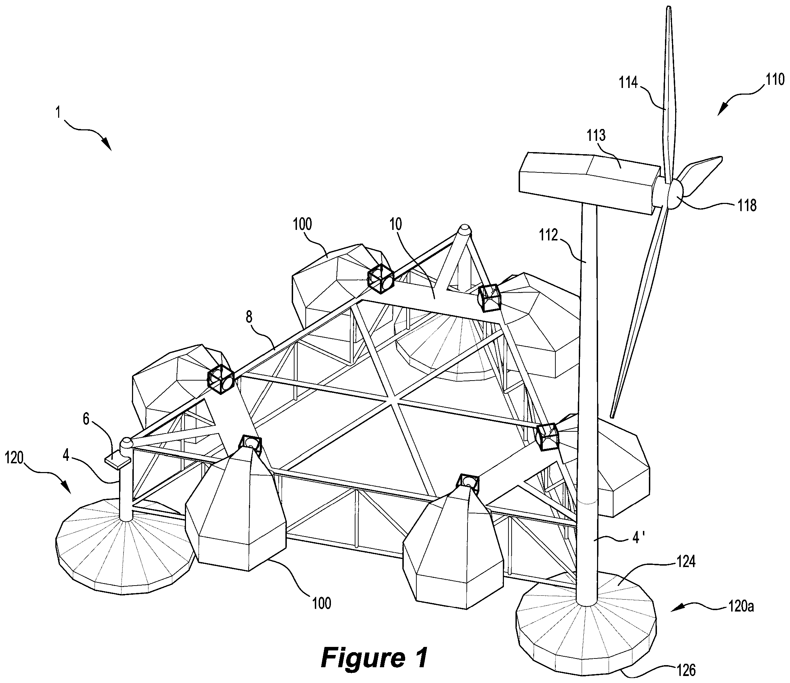

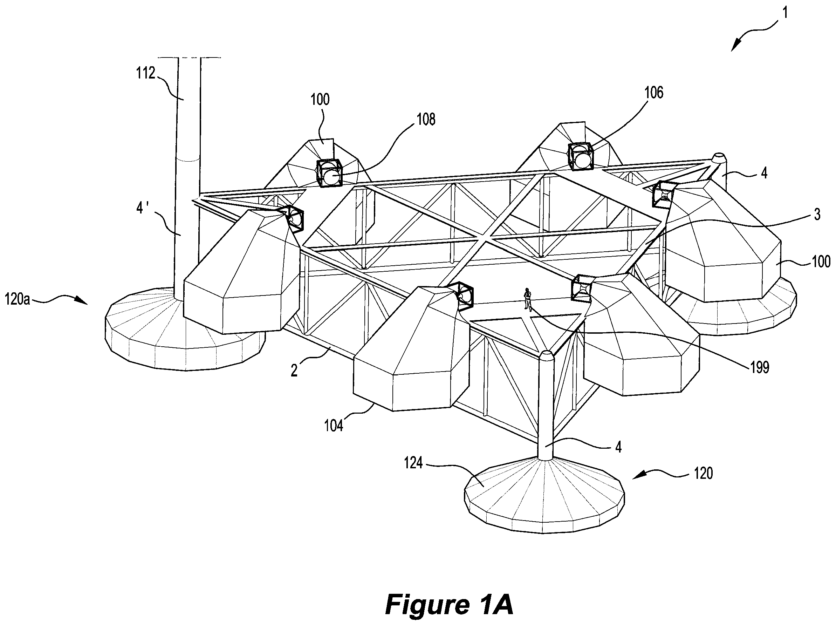

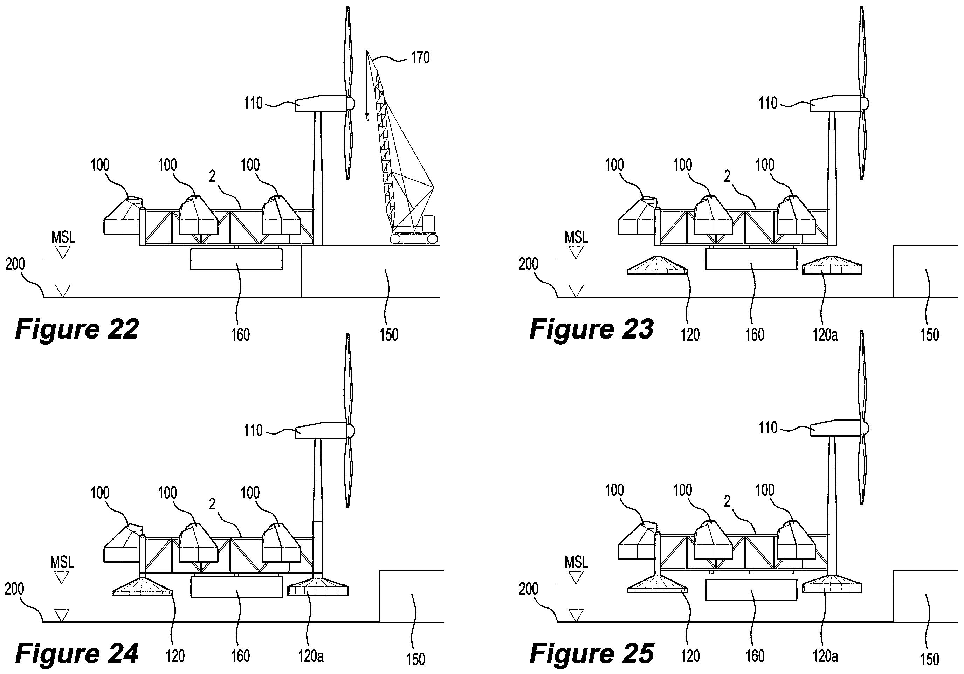

Referring now to Figures 1 through 4, there is illustrated a power platform 1 according to a first aspect of the invention. The platform 1 supporting a plurality of devices for generating electricity from wave energy, illustrated in Figures 1 to 36 as Oscillating Water Column devices (OWCs) 100, accompanied by a wind turbine 110.

The power platform 1 comprises a polygonal-shaped platform body. The shape will depend on the number of OWCs to be mounted and could be hexagonal or pentagonal. In the embodiments shown the platform body is a triangular platform body 2, in accordance with the invention manufactured from a framework of steel trusses so that the resultant platform body 2 is a rigid structure with a high specific strength (i.e. high strength-to-weight ratio). The steel trusses are formed from both plate and tubes. The primary steel structures are manufactured from steel having a yield strength of between 300MPa to 400MPa. Secondary steel structures for example, reinforcements and stiffeners, are manufacture from steel having a yield strength of between 200MPa to 250MPa. These material grades and dimensions of the platform body 2 give the platform 1 an approximate weight of between 2,400 to 3,600 tonnes (this is not including the OWCs 100 or wind turbine 110). Alternative materials can be used other than steel providing the required strength can be attained.

The triangular form of the body 2 also provides an inherent bottom stability, which means that no piling or expensive foundations are required to support or secure the platform 1 on the sea floor 200. The triangular form further provides floating stability, which enables the overall structure to be floated thereby minimising if not avoiding the costs of marine construction at sea.

The triangular form of the platform body 2 also lends itself to easily being scaled depending on resources to provide the desired size of platform 1, easily accommodating a variable number of OWCs 100. The embodiment illustrated shows the triangular body supporting six OWCs, although it is understood the same structure could evenly support three OWCs. Generally, the power platform could comprise any number of OWCs ranging from 1, 2, 3, 4, 5 or 6.

Each triangular unit of the body 2 is tubular in construction and plated on the top to create an enclosed portion of the upper platform body 2. In contrast the sides and lower portion of the body 2 are left largely un-plated to allow the passage of waves through each part of the body 2, uninhibited.

When the installation location of a platform 1 is to be determined, ocean charts are used to assess the available wave energy of the ocean or tides of a proposed installation site. These charts will generally provide energy availability for a calendar year to account for seasonal variations in tidal patterns. These charts will assist in determining what size of platform 1, the number of OWCs 100 and the size of wind turbine 110 suited to the location to provide an optimum power output. The potential yearly energy production for a configured platform 1 can be calculated using a power matrix. The proposed installation site and the power platform matrix are then overlaid to assess whether the desired power output is achievable.

The OWCs 100 are attached to the rigid platform body 2 by mounting the OWCs as discussed in more detail below. The platform body 2 is constructed on land before being floated out to a predetermined off shore location. Where the predetermined location is far from shore for example 2 to 4 kilometres off shore, a barge is employed to transport the platform 1, fully or partially constructed, to the general vicinity of the installation location. The installation location requires a sufficient depth of seawater for efficiently harvesting wave energy. This is between 20 to 40 metres for the platform 1 described herein, typically a greater depth of water will provide more available wave power. This optimum working depth will vary for different sizes of platform 1 and different sizes of OWCs 100. It is contemplated that the platform 1 can be located as far as 10km from shore.

The power platform 1 is configured to have a wave dispersal feature. Specifically, the structure of the platform 1 acts to disperse waves in that the structure, when oriented facing the direction of oncoming waves, has a diverging portion that diverges in the direction the wave is travelling. The diverging portion faces into the direction of oncoming waves so that an oncoming wave first encounters a narrow front that diverges so that the wave can be deflected. For example, in the embodiment illustrated the triangular form of the body 2 assists in breaking the resonance of the oncoming waves, to which the body 2 is constantly exposed, once in situ. The apex of the corner column 4' of the platform body 2 cutting the approaching waves and dispersing them around the platform 1. The wave dispersal feature of the platform body 2 also assists in guiding the waves around the OWCs 100.

By mounting a plurality of OWCs 100 onto a single rigid structure, the configuration of the platform 1 is better suited to surviving the conditions at sea. The fatigue loading on the platform body 2 can be high in sea areas where large amounts of wave activity and/or high wave conditions are experienced. The constant lashing of high waves onto the platform 1 can cause high levels of stress on the interconnections between components of the platform 1. Where the body 2 is configured from multiple interconnected modules, where the modules contribute to the rigidity of the structure, this fatigue loading is experienced on the joints and connections between the modules. This fatigue loading on the joints between modules of the body 2 can reduce the life expectancy of the platform 1.

The body 2, once installed, is at least partially submerged in the sea, having a draft of between 1 and 3 metres. The draft can be changed to adapt to different locations of the platform 1.

The platform body 2 supports the OWCs 100 in a closed loop configuration, as distinct from in a straight line. This configuration promotes stability of the power platform 1 in ocean conditions, particularly for larger platforms. The closed loop configuration of OWCs 100 are arranged along a periphery of a loop that, depending on the number of OWCs, could be a triangle loop (three OWCs) of equally spaced OWCs, or a square loop (four OWCs), a pentagon loop (five OWCs), a hexagon loop (six OWCs) and so on.

In the embodiments illustrated, there is for each of the three sides of the platform body 2 two OWC's 100 depending therefrom, one being at or toward each of the respective ends of that side of the platform body 2. In other words, there is for each of the three corners of the platform body 2 an OWC 100 located on each side of the corner.

For the purposes of giving a sense of the scale of the platform 1 illustrated in the Figures, each of the three sides of the platform 1 is approximately 80 meters long. The size and scale of the platform 1 will depend on the natural energy resources available and can range from 20 m to 100 m. Each OWC 100 has a diameter of approximately 17 meters and a height of about 20 metres. Accordingly, the platform 1 further comprises boat landing platforms 6, as well as various walkways 8 and maintenance platforms 10 extending around and between the OWC's 100 and the wind turbine 110.

In Figure 1A an average size person 199 is shown standing on one of the maintenance platforms 10. The platforms 10 are located about 5 metres above the mean sea level (MSL) to minimise the wetting of the platform 10. This assists in providing dry (or at least drier) working conditions for maintenance and repairs to be carried out.

The boat landing platforms 6 provide vessel mooring and personnel access to each platform 10. The boat landing platforms 6 are ideally located on the leeward side of each platform 10 to provide protection and minimise exposure against the action of the primary wind and wave directions.

The triangular shape of the platform body 2 comprises three corner columns 4 and the apex of each side of the body 2. Figure 1 illustrates a support 120 for the platform 1 depending from each of the three tubular corner columns 4 of the body 2. Figure 1 further illustrates a primary support 120a disposed under the corner column 4' of the body 2 that supports the wind turbine 110. The secondary supports 120 at the two remaining corners of the body 2 are of smaller volume, as they have less weight to support when the power platform 1 is floated in the sea or seated on the sea floor 200.

An important advantage of the above described platform 1 layout is that the effect of shadowing from water movement of one OWC 100 due to the presence of another OWC 100 depending from the same platform 1 is minimised. This is discussed in more detail in relation to OWC 100 layout and orientation.

Figure 1A illustrates the platform 1 as a wire frame. Six OWCs 100 are illustrated space in three equidistant pairs around each corner column 4, 4' of the body 2. In the wire frame illustration, bi-directional turbines 108 can be seen inserted into an aperture 106 of a housing 102 of each OWC 100. Each OWC 100 can produce about 1MW of energy when running at optimum levels.

Each OWC 100 comprises a housing 102 which surrounds a cavity 103. The cavity 103 has an opening under sea level for receiving and expelling waves into and therefrom. The water entering the cavity 103 forces the air within the cavity to move upwards within the OWC 100. At a height above sea level the housing 102 comprises an aperture 106 for propelling air out of the cavity 103 and sucking air into the cavity 103. As the wave pushes air out of the aperture 106 the air is forced towards the turbine 108 and over the blades (not shown) of the turbine108, so to the OWC 100 sucks air back across the turbine 108 and blades thereof as the wave exits the cavity 103 (hence bi-directional turbine). The air travelling across the turbine blades is changing direction in each part of the suck-blow cycle and as such a typical turbine 108 would have to slow down and reverse direction each time the air direction changes. This involves a lot of wasted energy in slowing the turbine 108 and overcoming its inertia to repeatedly change the turbine direction.

To maximise the efficiency of the energy harnessed from the wave, the turbine 108 affixed to the air inlet/outlet aperture 106 of each OWC 100 is a bi-directional turbine 108 whereby the turbine 108 is always driven in a single direction, regardless of whether the air is entering or exiting the aperture 106 of the OWC 100. This can be achieved, by allowing the blades of the turbine 108 to pivot and reorient each time the air direction changes. However, the same effect can also be achieved by configuring the housing 102 of the air inlet/outlet aperture 106 to redirect the airflow before it contacts the blades of the turbine 108. This can be done by virtue of a series of rotor blades, stators or diffusers around the internal housing 102 of the OWC 100 in the area of the aperture 106.

The OWCs 100 around the platform 1 are pointed towards the centre of the platform 1 to promote proximity of handling and are located at an optimal height about the maintenance platforms 10 to facilitate inspection, maintenance and repair. Each OWC 100 weighs in the region of 125 tonnes (not accounting for a further 15 tonnes from each turbine 108).

The platform 1 can be anchored or moored to maintain the platform at the predetermined installation site where the optimum wave conditions have been calculated. For stability, the platform 1 is anchored or moored to the sea floor 200. The anchoring can be an anchor, or a restraint, or series of restraints to be fixed to a geographical feature on the sea floor 200.

In a preferred embodiment of the power platform, and as illustrated in the drawings, the platform 1 is installed to sit upon the sea floor 200. When seated on the sea floor 200 the platform 1 ceases to be a floating structure. This form of installation provides a static structure from which the OWCs 100 depend. This static structure facilitates more efficient and predictable creation of energy when compared to a floating structure. The installation site of the platform 1 will determine the characteristics of the platform 1 best suited for optimum power generation.

The wind turbine 110 is disposed at one apex of the platform 1. The wind turbine 110 is of a conventional form having a post or tower 112 which supports a spinner 118. The tower 112 is approximately 75 metres in height. However, larger wind turbines 110 can also be fitted to the platform 1, at heights of 110m to 125m. Extending outwardly from the spinner 118 is a plurality of blades 114 which are aerodynamically shaped to force the spinner 118 to rotate as wind moves across the blades 114. The spinner 118 is rotatably connected to a housing or canopy 113 which houses the power train 116 of the wind turbine 110. Simplistically, the power train 116 comprises a driven shaft, a gear box, a series of bearings and a generator.

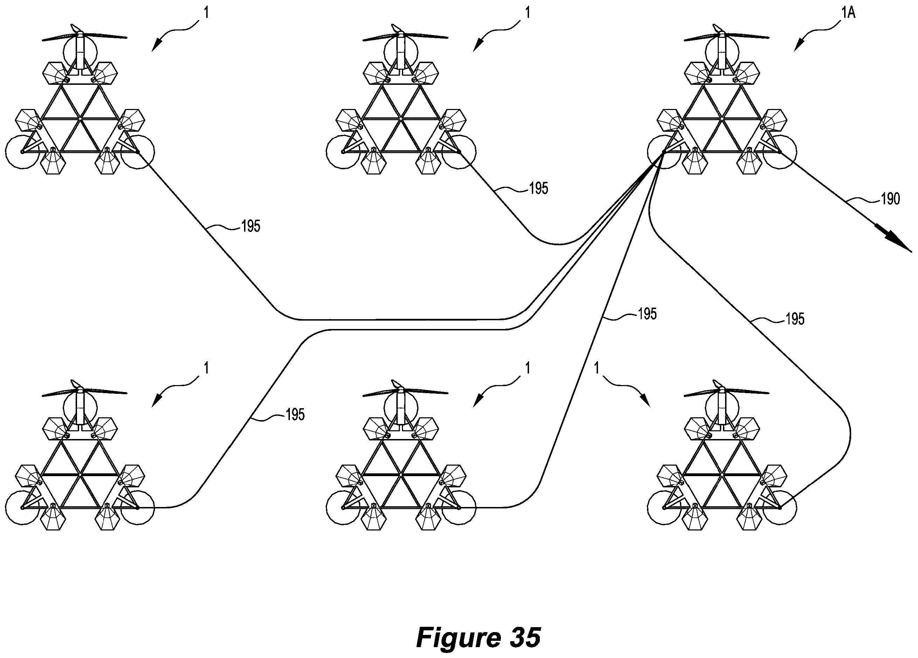

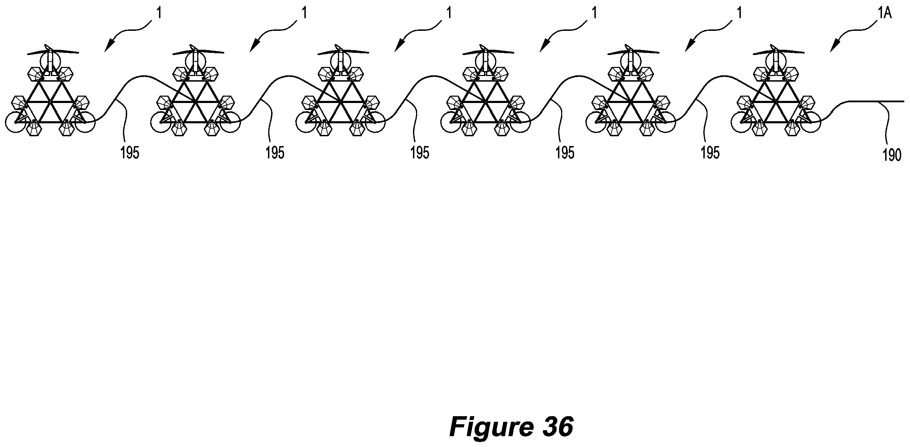

The output from the wind turbine 110 generator is between 500kW to 10 MW. This is combined with the 6 × 1MW output of the OWCs 100 to provide a potential output of between 6.5MW and 16 MW of power when operating at peak conditions. This output is electrically connected to a power transmission line 190 from which the platform 1 transmits energy to an onshore collection point (illustrated in Figures 35 and 36). In an alternative embodiment, the energy could be used on the platform to drive water filtering processes as an alternative arrangement to transmitting energy back to shore.

A levelling system (not illustrated) is incorporated into the base of the tower 112 to ensure that the tower base can be levelled within a certain degree of tolerance once the platform 1 is in the installation location.

The wind turbine 110 can alternately be placed into the centre of the platform 1, without the need for additional reinforcement, foundations or steel pilings.

A wind turbine 110 is graded with a power curve which gives an indication of the power output of the turbine 110 in different conditions. Accordingly, the power curve is consulted when determining which size of wind turbine 110 is most appropriate to a given installation location, to allow the turbine 110 to operate efficiently.

### Power Platform Construction

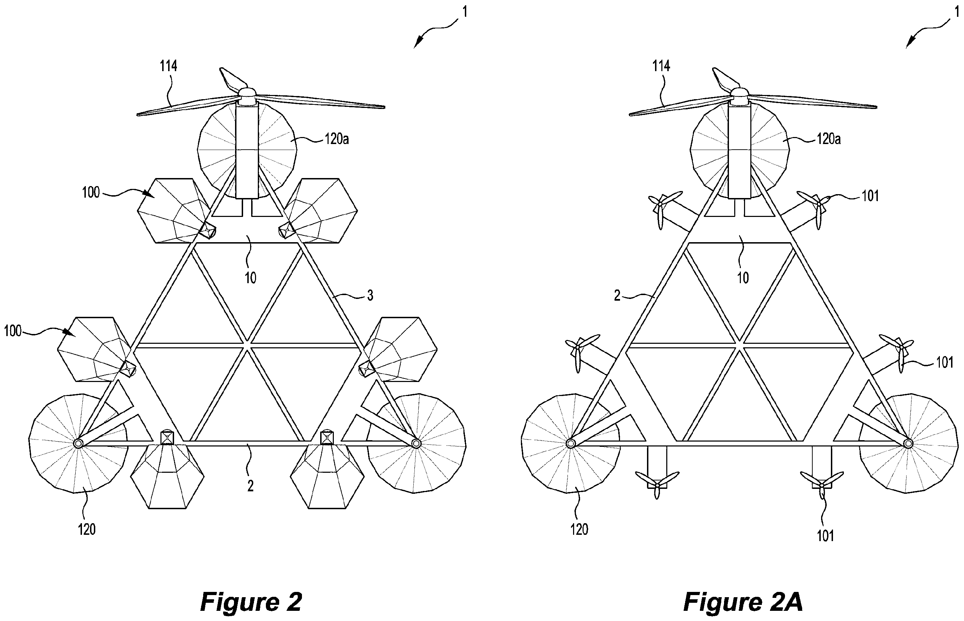

Figure 2 is a plan view of the platform 1 and illustrates a possible layout of the OWCs 100 around a periphery 3 of the body 2. The spacing of the OWCs 100 around the platform 1 affects the weight distribution of the platform 1. Furthermore, the spacing of a first OWC 100 relative to a second OWC 100 will affect the wave energy captured, depending on which OWC 100 made contact with the wave first and how the fluid dynamics of the wave were altered from contact with the first OWC 100.

In the configuration shown in Figure 2, two OWCs 100 can be accessed and maintained from a single platform 10 which facilitates maintenance and installation of the OWCs 100. However, the directionality of the OWC 100 to the platform 2 is only a one of the factors that influence the output of the platform 1. The directionality of each inlet 104 of each OWC 100 relative to the oncoming wave direction is another important factor that influences the power generation ability of the platform 1. This will be discussed in further detail later in the specification.

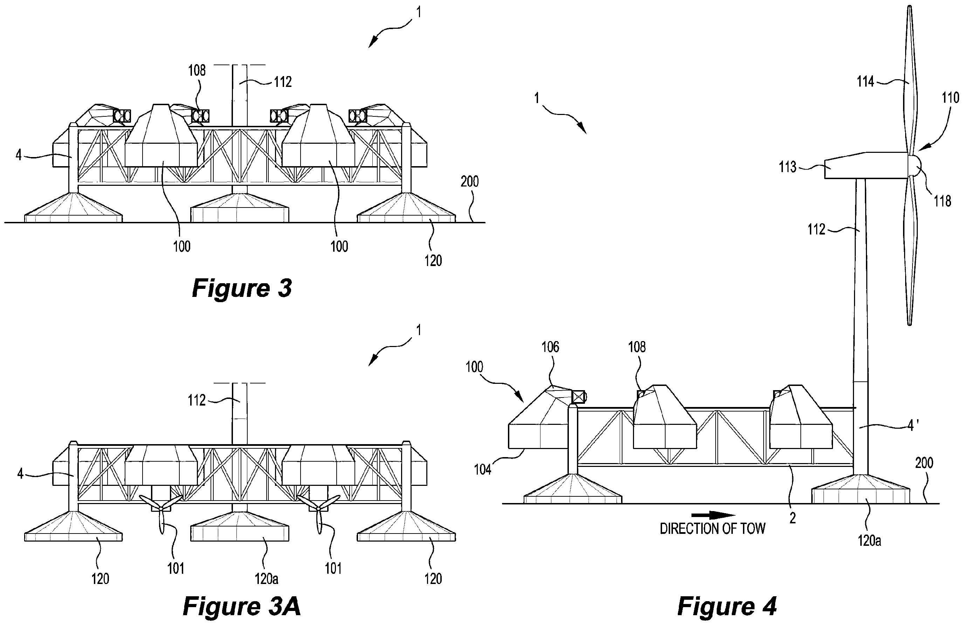

Figure 3 and 4 illustrate the platform 1 from a side and an end view, both of which clearly illustrate the difference in volume between primary support 120a and the secondary supports 120. The primary support 120a has a similar radius to that of the supports 120 about 24 metres. However, primary support 120a has a deeper base 126 (approximately 4m) when compared to secondary support 120 which has a base of approximately 2m in depth. This additional depth of the primary support 120a provides additional volume for a ballast chamber or tank, or plurality of chambers/tanks, housed within the supports 120a, 120. An inlet to the ballast tanks (not shown) provides access for filling the tanks with ballast.

The ballast tanks required to sink and float the platform provide about 9,000 cubic metres of ballast volume. The ballast tanks are divided into multiple chambers to facilitate a controlled raising and lowering of the platform 1, otherwise the platform 1 can become unstable due to the eccentric loading of the wind turbine 110.

The ballast within the tanks can be particulate material such as rocks and stone. However, the ballast can also comprise sea water and/or clump weights. In environmentally sensitive areas, ballasting with sea water can reduce the likelihood of impacting the marine environment around the platform 1.

The supports containing the ballast tanks are located spaced from the OWCs so as to provide an optimum stable configuration of the entire power platform while minimising any effect of the supports on the waves entering the OWCs.

### Support legs

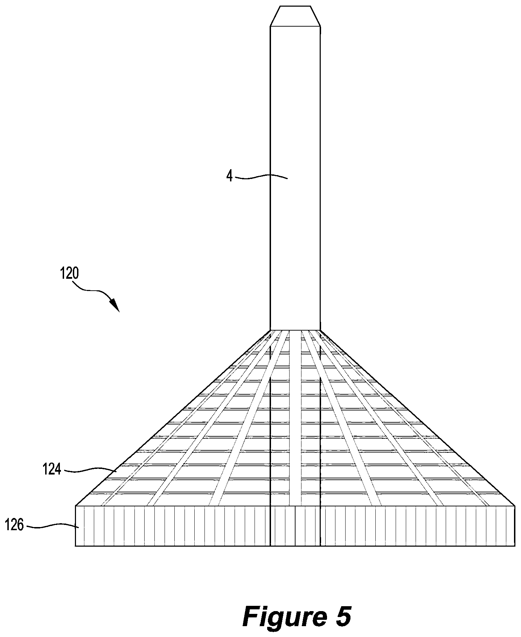

Figure 5 illustrates a support 120. The support comprises a body 124 and a base 126. The support 120 is configured to be permanently attached to a corner column 4 of the platform body 2.

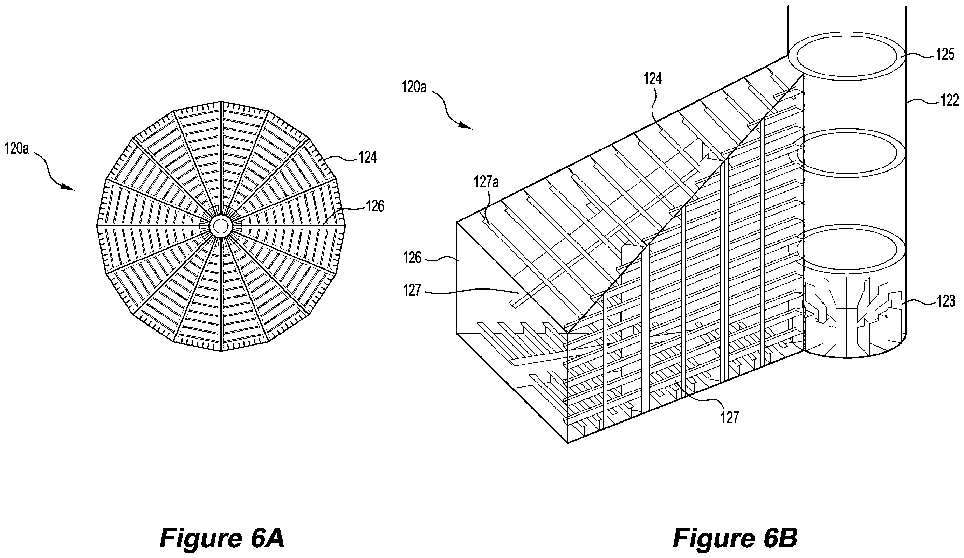

Referring now to Figures 6A and 6B of primary support 120a. The primary support 120a is configured to be attached to a corner column 4' of the body 2 beneath the wind turbine 110. The support 120a comprises a body 124 which is substantially conical in shape, tapering downwardly and outwardly from the corner column 4' to a broad base 126.

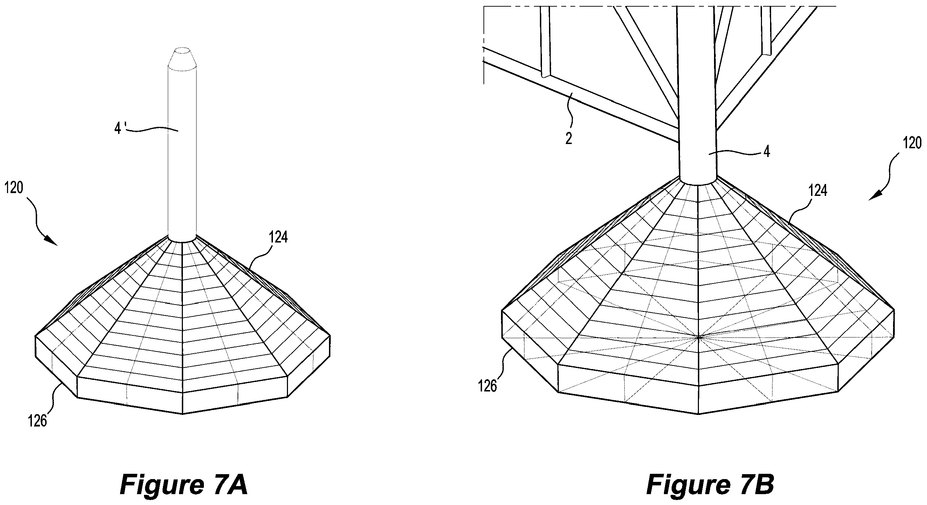

The primary support 120a, has an approximate diameter of 24 metres. The corner column 4' of the primary support 120a has a length of 14m and an approximate diameter of 4 metres. The secondary support 120, shown in Figures 7A and 7B, also has an approximate diameter of 24m. However, the corner column 4 for attachment of the secondary support 120 is about 13.5m in length and 2.5m in diameter.

Each of the supports 120,120a is substantially hollow and of such a volume as to displace sufficient sea water that together the three supports 120,120a provide sufficient buoyancy to float the platform 1. Moreover, each support 120,120a comprises a ballast tank which can be flooded to sink the support 120, 120a, or purged to once again render the platform 1 buoyant.

By positioning the supports 120, 120a containing the ballast tanks about the periphery 3 of the body 2, a substantial amount of bottom stability is provided to the platform 1 against overturning and sliding.

The primary support 120a has a greater displacement than the two secondary supports 120, because this primary support 120a is positioned beneath, and so bears a majority of the weight associated with the wind turbine 110. The two secondary supports 120 are disposed at the two corners columns 4 of the platform body 2 without a wind turbine 110.

Returning to Figure 6B, which is a transparent illustration of the body 124 and base 126 of the primary support 120a. Throughout the base 124 there are a number of reinforcing members 127. The reinforcements 127 do not cross the volume of the base 124, so as to provide a void or cavity defining a ballast tank within the body 124. Accordingly, all the reinforcements are disposed around the outer surfaces of the body 124 and base 126. A segment of base 126 is illustrated in Figure 5B, this segment being one of 16 that together form the base 126 and body 124 of the support 120a. A ballast tank is housed within each of the sixteen segments. This facilitates a modular manufacture of the body 124.

The reinforcement members 127 are made from steel girders and lighter stiffener members 127a configured to support the weight of the platform 1. It is contemplated that other materials can be used to manufacture the reinforcements 127, 127a provided the material has sufficient tensile strength to support the platform 1 and is economically viable.

The sixteen segments of the body 124 are evenly disposed about a core 122 of the support 120a. The core 122 is also provided with internal reinforcements in two forms. A first core reinforcement 123 is provided in the form of flat plates that are intended to support an end portion of the core 122. A second set of reinforcements within the core 122 are in the form of reinforcing rings 125. These rings 125 are disposed at regular intervals along the length of the core 122.

Figure 7A illustrates a perspective view of the secondary support 120, in which similar segmented construction can be seen to that of the primary support 120. The support 120 in Figure 7A is made from eight segments. The transparent perspective view of the support 120 in Figure 7B illustrates the eight segment construction of the support 120, wherein each of the 8 identical segments is evenly located around the post 4.

The corner column 4 is configured to be welded to the base 124 when the platform 1 is suspended above a body of water. Although not shown in Figures 5 to 7, it is contemplated that mating structure will be formed into the base 126 and/or corner column 4, 4' to facilitate alignment between the platform 1 and supports 120, 120a during assembly.

### Oscillating Water Columns

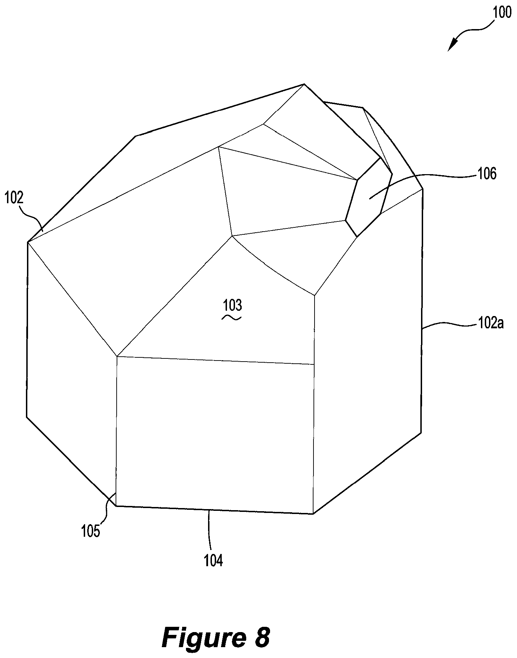

Referring now to Figures 8 through to 15, which provide more detail about the configuration and orientation of each of the OWC's 100, the OWC 100 comprises a housing 102 creating a cavity 103 therein.

The cavity 103 has a volume of approximately 1080 m³. The housing 102 further comprises a generally downwardly directed opening 104 for accepting seawater into, and expelling seawater from, the cavity 103. The OWC 100 further comprises a second opening, or aperture 106 for ingress and egress of air from the cavity 103. The opening 104 must be located below sea level to facilitate communication with seawater and the aperture 106 is located above sea level to facilitate communication with ambient air. The OWC 100 further comprises a turbine 108 (not illustrated here) in communication with the aperture 106, such that the turbine 108 is driven by the air movement into and out of the aperture 106.

Different aperture 106 sizes were tested on a scale model of an OWC 100 and an optimum aperture 106 diameter was found to be between 1.5 and 2 metres. In testing, the performance of the OWC 100 was not seen to be heavily dependent on the orientation of the aperture 106, relative to the oncoming wave direction. Small differences were recorded between the OWC 100 pneumatic output with the aperture 106 being located on the side of the OWC 100 facing the wave in contrast to the aperture 106 being disposed on a face of the OWC 100 opposing the oncoming waves.

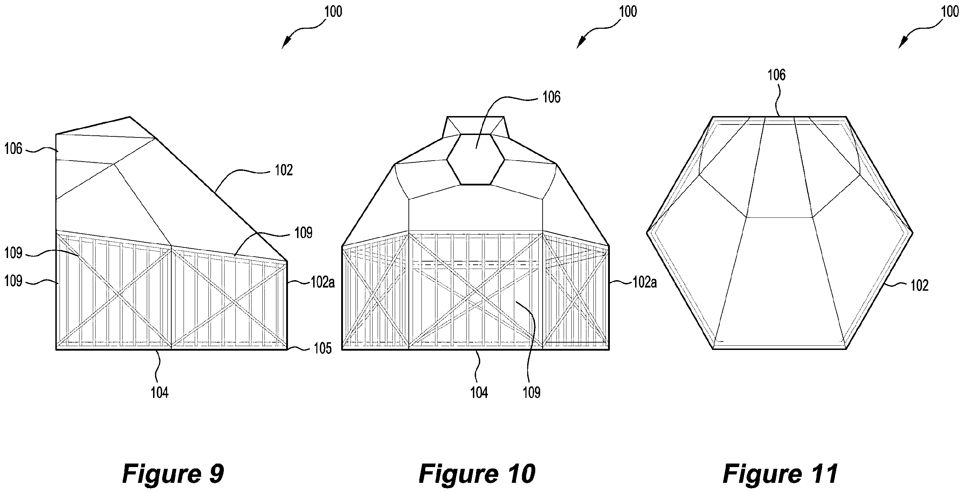

Figure 9 illustrates a side elevation of the OWC 100 having a total height of about 16m. A lower portion 102a of the housing 102 is heavily reinforced with braces 109. These braces 109 support the lower housing 102a in a substantially horizontal and a substantially vertical direction. The lower portion 120a of the housing 102 is further cross braced with braces 109. The braces are made of metal preferably steel and are manufactured in 12 inch to 16 inch cross-sections.

In figure 9 the entire base 105 of the OWC 100 forms the opening 104, which is open to seawater and incoming waves. The entire opening 104 allows for the natural rise and fall of seawater within the cavity 103 from the wave motion of the seawater.

The aperture 106 for ingress and egress of air from the cavity 103 is located at the farthest point from the base 105, to maximise the amount of air movement displaced within the cavity 103. As the air is forced towards the aperture 106 it is forced out of the cavity and past the blades of the turbine 108.

Figure 10 is a front elevation of the OWC 100 and illustrates the braces 109 encircling the entire lower housing 102a of the OWC 100.

The base 105 of the OWC 100 has a hexagonal shape with each side being approximately 10m in length. It is contemplated that the OWC 100 can be made from other shaped sections, for example circular, ovoid, square or rectangular. The hexagonal configuration, shown in Figure 11 provides an appropriate strength-to-weight ratio for the housing 102 whilst lending itself to fabricated methods of manufacture.

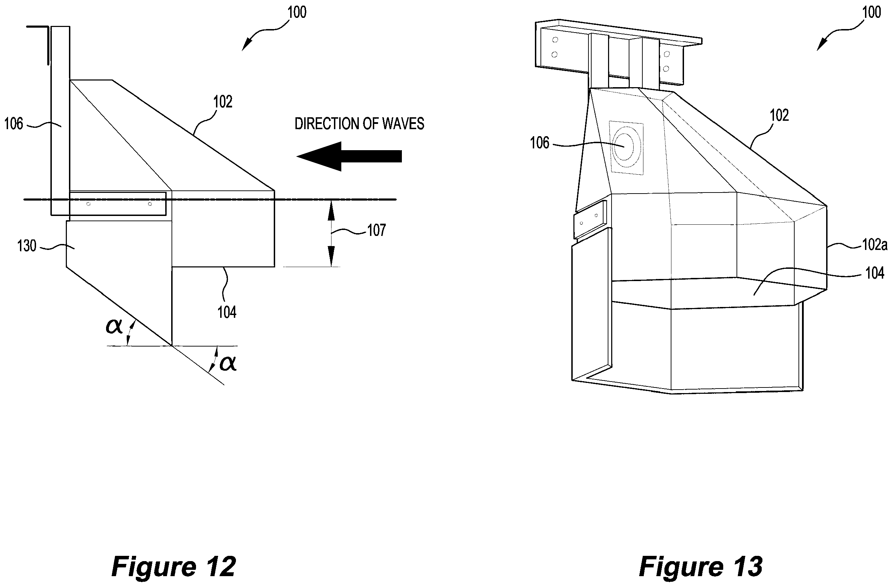

Figure 12 shows the orientation of the OWC 100 relative to an oncoming wave direction. Here the opening 104 is disposed above the oncoming wave direction, so that the wave effectively passes perpendicularly to the opening 104. This allows an upward motion of the wave to enter into the cavity 103. The wave direction will be subject to some fluctuations, however, a predominant wave direction is found to exist in ocean waves or currents. This predominant wave direction is predetermined for the location of the platform 1, from which finer adjustments can be made when positioning the platform 1 and associated OWCs 100.

### Shroud

A further means of fine tuning the orientation or the effective working angle of the OWC 100 is provided by a shroud 130. The shroud 130 is positioned below sea level. The shroud 130 partially surrounds the opening 104 and assists in increasing the wave volume urged into the cavity 103 of the housing 102 during each wave cycle.

Effectively, the shroud 130 acts like a funnel, extending outwardly from the opening 104, to capture a larger amount of wave (water volume) and channel the water into the opening 104.

In one form, the shroud 130 can be removably secured to the housing 102 to allow for repositioning as and when required. This adjustment means for the inlet 104 of the OWC 100 allows for optimal power production from the OWC 100. Repositioning of the shroud 130 can be automatically managed by a control system. Accordingly, in use the shroud 130 can be positioned to optimise electrical power production for variations in oncoming wave direction.

The shroud 130 extends downwardly from the inlet 104 and directs the moving waves towards the opening 104, creating an amplifying effect on the wave. The shroud 130 extends, at least partially around the inlet 104 (approximately half way in the illustrated embodiment), which further assists in directing water into the opening 104 of the OWC 100, thereby increasing the rate of electrical power production of the OWC 100.

The shroud 130 was tested using a scale model of an OWC 100 and an increase in pneumatic power from the OWC 100 was seen with the shroud 130 attached at the stern of the OWC 100, that is farthest from the oncoming wave direction.

The schematic of Figure 12 illustrates a draft 107 of the OWC 100. The draft 107 refers to the depth below sea level at which the opening 104 is located. The shroud 130 has a draft of between 3.2 metres and 6.4 metres. The shroud 130 is constructed from a metallic composite material. However, it is contemplated that a composite plastics material could also be used to manufacture both the shroud 130 and the housing 102.

Numerous draft depths were tested on scale models and an optimum draft was found to be between 3.6 and 4.5 metres. A shallow draft 107 of the OWC 100 will increase the risk that the OWC 100 becomes open to the atmosphere in high seas, that is, where high wave peaks and troughs are experienced. The shroud 130 is configured to extend below the draft 107 of the OWC 100 thereby increasing the volume of water forced into the cavity 103 from a wave.

Various shroud 130 configuration were tested, a few of which are illustrated in Figures 13 to 15. A first shroud embodiment, in Figure 13, illustrated a straight shroud 13 that extends directly towards the sea floor 200. The Shroud 130 extends approximately twice the draft 107 of the OWC 100.

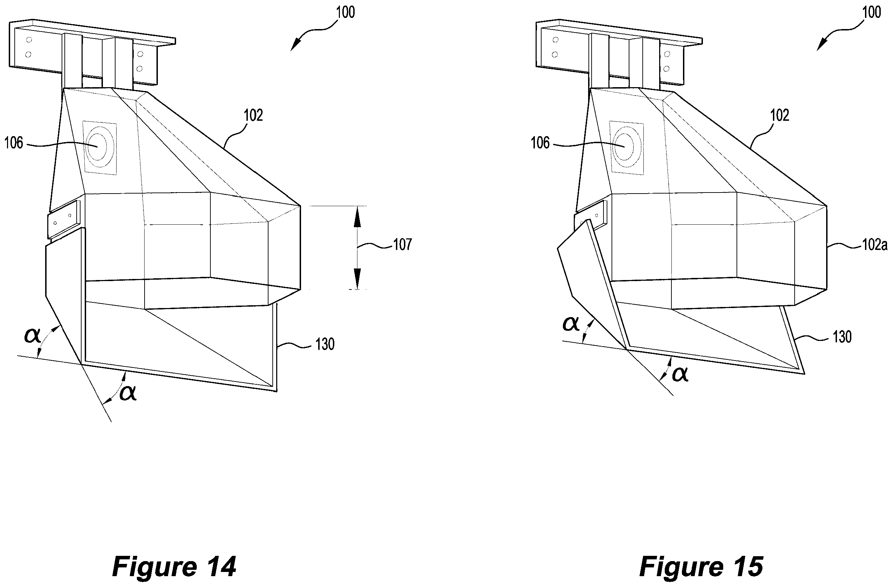

Figure 14 illustrates a shroud 130 that also extends to twice the draft 107 of the OWC 100; however, the shroud 130 is inclined towards the oncoming wave direction in a scoop-like form. The shroud 130 is inclined by the angle α to the oncoming wave direction. In this embodiment, the angle α is about 65 degrees. Of the shroud 130 configurations shown in Figures 13, 14, and 15, the shroud 130 in Figure 14 was shown to be most effective for pneumatic power output of the OWC 100.

By providing angle α of inclination for the wave vector to travel along, the volume of seawater entering the cavity 103 can be increased. However, where the angle α of inclination is too extreme, the flow of water into the opening 104 will become turbulent and hamper the water entering the cavity 130.

In a third embodiment of the shroud 130, illustrated in Figure 15, the angle α of inclination was reduced from 65 degrees to 45 degrees, as was the depth to which the shroud 130 extended. This draft of the shroud 130 is approximately half of that shown in Figures 13 and 14. The shroud 130 configuration of Figure 15 performed better than that of Figure 13 but not as well as that of Figure 14. Other angles of inclination α were tested as low as a 35 degrees inclination to the oncoming wave.

From tests the angle of inclination of the shroud is preferably between 45 degrees and 80 degrees. Ideally the angle is about 65 degrees.

The shroud 130 configurations in combination with varying aperture 106 diameters were tested using scale models. These models clearly showed that when the OWC 100 is in contact with monochromatic and panchromatic waves of different durations, the optimal pneumatic power output of the OWC 100 varied significantly. Accordingly, the wave type, duration and direction at the installation site are influencing factors when fine tuning the apertures 106, shrouds 130 and OWC 100 orientation for a given platform 1.

The scaled tests were also conducted on the angle of the shroud 130 relative to the oncoming wave direction. These results indicated a reduction in pneumatic power output for each angle of orientation the shrouded OWC 100 was turned, moving away from the oncoming wave direction. When the shroud 130 is placed between the oncoming wave direction and the opening 104, a 50 % reduction was seen in the scale model.

### Mounting OWC To Platform

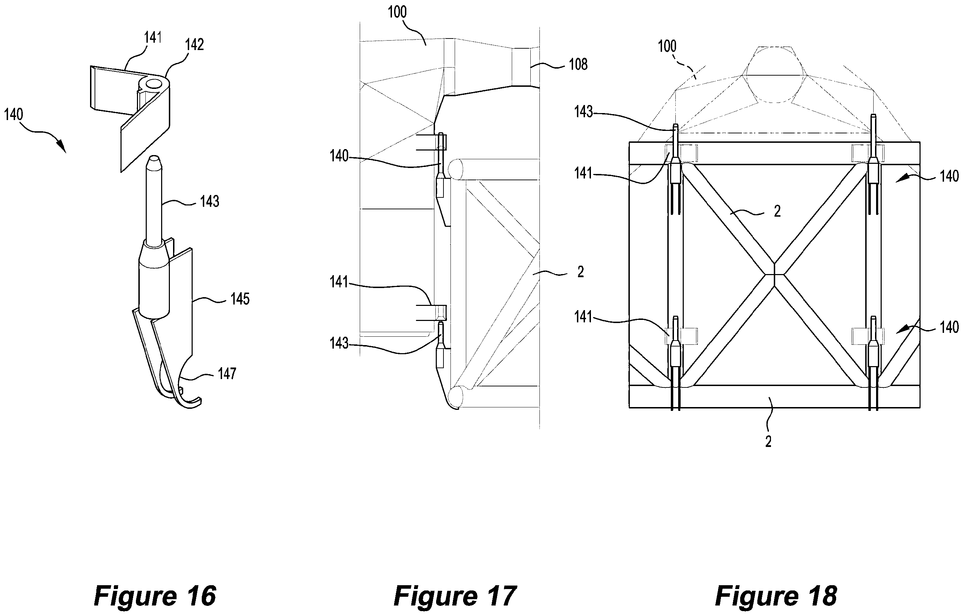

The OWCs 100 are too large to be integrally formed with the rigid platform body 2. Accordingly, each OWC 100 requires at least one mounting assembly 140, as illustrated in Figure 16.

The mounting assembly 140 comprises two portions, similar to a hinge. The first portion attached to the OWC 100 provides a cylindrical housing 142 affixed to the housing 102 by a mounting bracket 141. The second portion of the mounting assembly 140 provides a bar 143 that is attached to the platform body 2 by virtue of a pair of arms 145 configured to mount to the truss structure of the body 2.

The pair of arms 145 is curved to align with the curvature of the truss structure of the platform body 2. These mating surfaces are ideally welded together when the platform body 2 is manufactured. The pair of arms 145 supports a bar 143 that tapers inwards at the opposing end to the pair of arms 145. The tapering of the bar 143 assists in threading the bar 143 into the cylindrical housing 142 of the first portion thereby, hingedly joining the OWC 100 to the body 2.

Figure 17 illustrates a side view of the OWC 100 where two mounting assemblies 140 are used to secure the OWC 100 to the platform 1, a lower and a higher mounting assembly. The bar 143 of the higher mounting assembly is longer than the bar 143 of the lower mounting assembly, allowing the OWC 100 to be aligned with one mounting assembly 140 at a time. This means of mounting the OWC 100 provides some relative movement between the OWC 100 and body 2 to align the first and second mounting assemblies 140.

Shown in Figure 18 is a four mount strategy for the OWC 100. In this aspect, there are four mounting assemblies 140 provided, two upper and two lower, positioned either side of a cross-braced truss of the body 2. Mounting the OWC 100 to a stiff part of the platform body 2 will improve the load paths into the body 2 and reduce the fatigue on the structure. Of the four mounting assemblies 140 in this aspect, one of the upper bars 143 is longer that the remaining three bars 143, to provide a locating point when first attaching the OWC 100 to the platform 2. Once the first mounting assembly 140 is located, there is still sufficient play to adjust and position the remaining three mounting assemblies 140.

In alternate embodiments, it is contemplated that a similar mounting system can be employed to connect the OWC 100 to the platform body 2, whereby the components of the mounting assembly 140 are reversed. That is to say, the cylindrical housing 142 and mounting bracket 141 can be permanently affixed to the platform body 2, and the pair of arms 145 and bar 143 can be affixed to the OWC 100 to be slotted into the cylindrical housing 142 during mounting.

### Spacing of OWC Around Platform

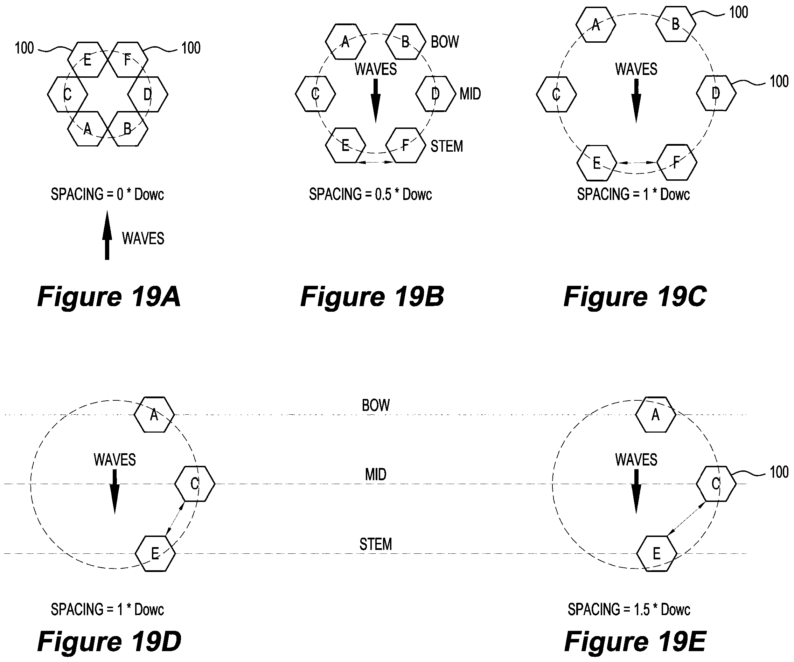

A series of experiments (both physical and finite element analysis) were conducted to determine the effects of the spacing between multiple OWCs 100 when depending from a single platform body 2. As the presence of each OWC 100 has an effect on a wave, which then affects the surrounding waves, an optimum spacing or positioning between the OWCs 100 is advantageous. Figures 19A-19E illustrate a series of different layouts between OWCs 100 within the confines of the platform body 2. These arrays were used for scale testing to assess the shadowing effect.

The shadowing effect, as the name suggests, is a wave phenomenon, whereby the contact between a first OWCs 100 will affect the propagation of a wave. In this manner each subsequent OWC 100 can be exposed to the same wave; however; the wave will have subsequently diminished from the effect of contacting the first OWC 100. In scale model testing a primary effect seen, was an effective power reduction in each OWC pair placed closely behind another pair of OWCs 100. This reduction in power is dependent on the distance between each pair of OWCs 100. As such the reduction is stronger in the case of two pairs positioned in closed proximity. As the second pair of OWCs 100 are moved away from the frontal pair the shadowing effect is seen to lessen, until an optimum distance is reached at which point the shadowing effect is no longer observed.

In addition, there is a hydrodynamic interconnection between the OWCs 100 (hydrodynamic interconnection caused by the waves radiated due to the motions of the water columns) that decreases the energy capture capability (however this effect was not seen to be very strong). Accordingly, a frontal pair of OWCs in close proximity may affect each other (output wise) by means of hydrodynamic interconnection, however far more significantly will be the power reduction seen due to the shadowing effect on a secondary pair of OWCs 100 being exposed to the same wave after contact with the first pair of OWCs 100.

In Figure 19A the OWCs 100 are contiguous, contrasted with Figure 19B where each OWC 100 is spaced half a width of an OWC 100 from the subsequent OWC 100. This is approximately 8.5m. In Figure 19C the OWCs 100 are positioned 17m from each other, ie a full OWC 100 width apart.

Figure 19D maintains a spacing of 17 metres between each OWC 100 but removes three of the OWCs 100 in the array. Figure 19E maintains the three OWC 100 array of Figure 19D and increases the spacing between consecutive OWCs 100 to 25 metres apart (one and a half OWC spacing) in the half array.

When the OWCs 100 were spaced with no gap, as illustrated in Figure 19A, the two front OWCs 100 "A" and "B", make first contact with the oncoming wave. As such OWC A and B produced more pneumatic power than the OWCs A and B of the configurations in Figures 19B and 19C. The middle two OWCs 100 "C" and "D" did not show significant sensitivity to the spacing of the OWCs 100 in figures 19A to 19C. The rear most OWCs 100 "E" and "F", make final contact with the oncoming wave. OWC E and F displayed significant sensitivity to the overall OWC 100 spacing around the body 2. This sensitivity is due to the shadowing effect of the other four OWCs 100. Accordingly, when OWC E and F were spaced at a distance of 17 metres (about 1 OWC width) apart, greater pneumatic power output was achieved from each of the OWCs E and F.

The total pneumatic output of the platform 1, combining the power output from all six OWCs 100, was highest when all six OWCs 100 were spaced 17m apart from each other. When the half array of OWCs 100 were tested in the configuration of Figure 19E, with one-and-a-half OWC spacing (25 metres), no significant increase in pneumatic power output was observed.

### Installation of Platform

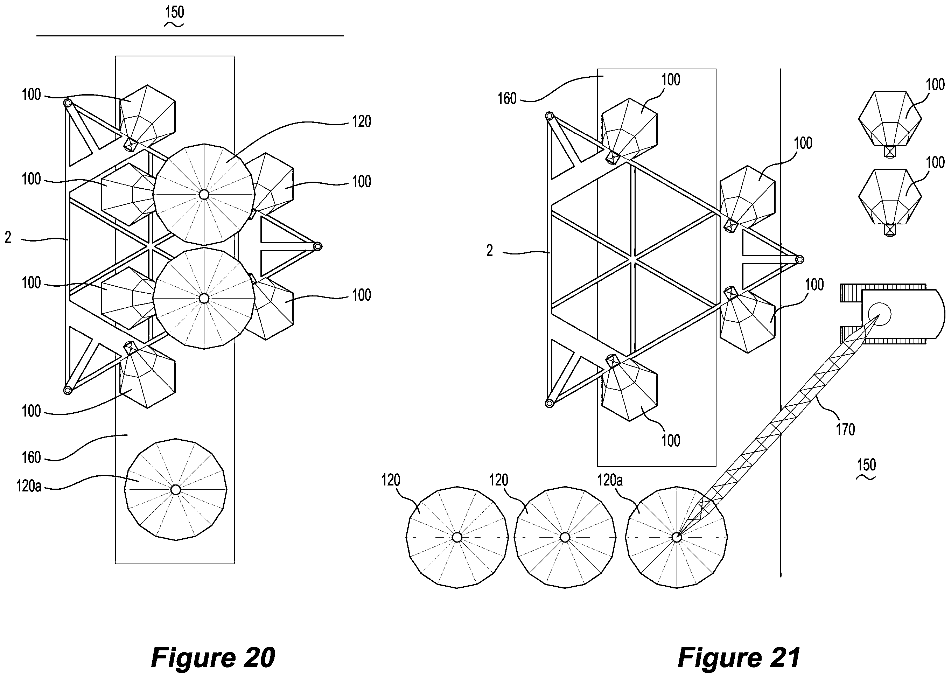

With reference to Figures 20 through 27, it is proposed that the largely but not completely assembled offshore platform 1 can be transported from its place of manufacture to a dock 150 nearer to the installation site, upon a barge 160. In order to achieve this however, it may be necessary to remove certain components or at least refrain from fitting these at the time of manufacturing the platform 1. In the embodiment illustrated, the platform 1 is shipped without the wind turbine 110, and without the supports 120, 120a and two OWC's 100 attached to the platform body 2. However, these detached components are positioned upon the barge 160 for transportation with the platform 1.

Once transported to the dock 150 nearer to the installation site, a mobile crane 170 can be employed to affix the wind turbine 110 and the two detached OWC's 100 to the platform body 2 in situ upon the barge 160.

The crane 170 is then be employed to float the three supports 120,120a which once floated, are positioned beneath their respective platform body 2 attachment points. Specifically, the supports 120, 120a are positioned under the three corner columns 4.

Once the supports 120, 120a are in position beneath the platform 1, the barge 160 is submerged deeper into the sea below the platform 1. The barge 160 is submerged by means of ballast tanks (not illustrated in the Figures), that can be flooded sufficiently to lower each of the corner columns 4 onto a respective support 120. Once lowered into position, the supports 120, 120a are permanently affixed (such as by welding) to the platform body 2 at preselected attachment points around the framework of the body 2. Each support 120, 120a requires individual control of the ballast material to control the submersing platform 1 with a horizontal attitude.

The ballast tanks of the barge 160 are then further flooded until the platform 1 is fully separated from the barge 160 and in no way supported by the barge 160. The platform 1 is then floating upon its supports 120, 120a and the barge 160 can be entirely removed from beneath the platform 1.

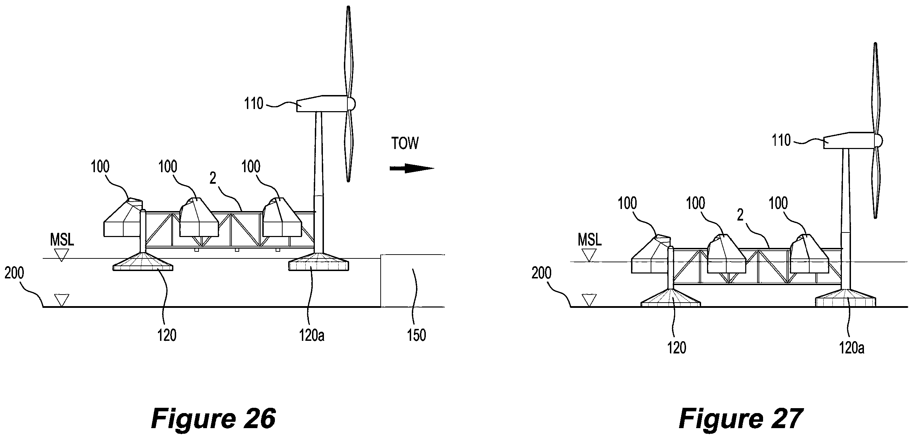

The self-floating platform 1 is then towed to the installation site. The towing direction is illustrated by an arrow in Figure 26. It is assumed that the horizontal distance between the towing vessels and platform 1 primary support 120a is sufficiently large and the tow points on the towing vessels are on the water surface. The towing arrangement is preferably symmetric with the resultant tow direction being head-on to the wind turbine 110. It is further preferred that the weather conditions for towing are calm, to avoid the requirement for additional trimming of the platform 1 due to wind or waves. The towing speed should not exceed 2 knots (1.029 m/s) and should not accelerate from 0 to 2 knots in less than 5 seconds, to maintain the stability of the platform 1 with the wind turbine 110 in place while the platform 1 is self-ballasted.

Upon arrival of the platform 1 at the installation site, flooding of the support 120, 120a ballast tanks 128 can be staged so as to sink the supports 120, 120a. The supports 120, 120a are lowered in the water until they sit on the sea floor 200. The platform 1 is then adjusted to rest level upon the supports 120, 120a on the sea floor 200. A suitable means is then employed to anchor the platform 1 in position, for example an anchor (not illustrated in the Figures).

Once on the seabed 200 the ballasting of the supports 120, 120a continues with specific attention taken to the levels of each corner of platform 1 during this operation. Ballasting at this stage also requires individual control to each support 120, 120a to manage the initial settlement of the platform 1 as being horizontal. After flooding of the supports 120, 120a and installation on site, additional ballast may be added to the supports 120, 120a to achieve the required stability and levelling of the platform 1. This additional ballast can be in the form of: pumped grout or concrete; filling with iron ore, rock or sand.

The method described above illustrates a mode of installation where the supports are affixed to the platform body close to shore and before towing to the installation site. It is however understood that the supports, as well as some or all of the OWCs can be connected to the platform body 2 offshore at the installation site. Furthermore, in some embodiments it may be available to tow a self-floating platform to the installation site, but in other circumstances, particularly where towing needs to occur over long distances or in unstable ocean conditions, it may be more suitable to float the platform to the installation site on a barge.

### Scour Prevention Skirt

Scour is pronounced in cases where the seabed is predominantly sandy. Scour is also pronounced when the water depth is less than 130 ft. Furthermore, where the tidal currents are fast moving i.e. normally running between 1.5 to 3 knots scour will also be pronounced.

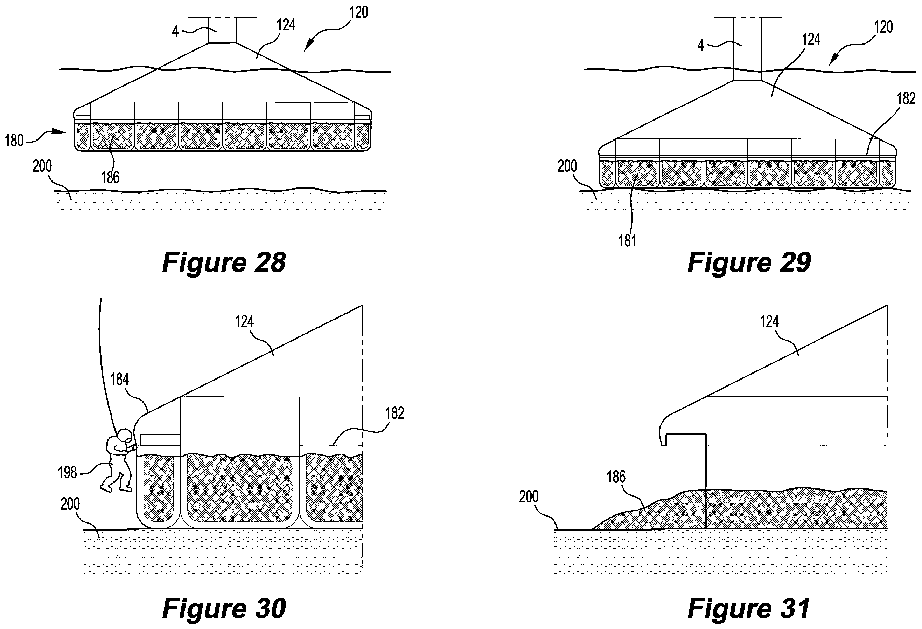

Referring now to Figures 28 to 34: a, where there is illustrated a scour prevention skirt 180 comprising a holding membrane in the form of a bag 181 of geotextile fabric releasably depending from and encircling the base 126 of the body 124 of the support 120. The holding membrane 181 is suspended from a retaining wire 182, which is in turn suspended between a plurality of brackets 184 that depend from the body 124 of the support 120, 120a.

The membrane 181 forms an envelope which is filled with a coarse particulate material 186 such as aggregate, stone, crushed rock, gravel or combinations of the above. Filling of the membrane generally occurs close to shore.

Once the platform 1 has been sunk or submerged in the desired position by flooding of the support ballast tanks 128, a diver 198 is deployed (although a remotely controlled underwater aquatic vehicle UAV could also be used) to cut the retaining wire 182 from which the membrane 181 is suspended. When the retaining wire 128 is cut, the membrane 181 will fall towards the seafloor 200 about the bases 126 of each support 120, 120a as illustrated in Figure 31.

The membrane 181 can be some form of plastic sheeting but may also comprise netting, wire or gauze that will allow seawater to flow through. This will reduce the drag when transporting the assembled platform 1 to the predetermined location off shore.

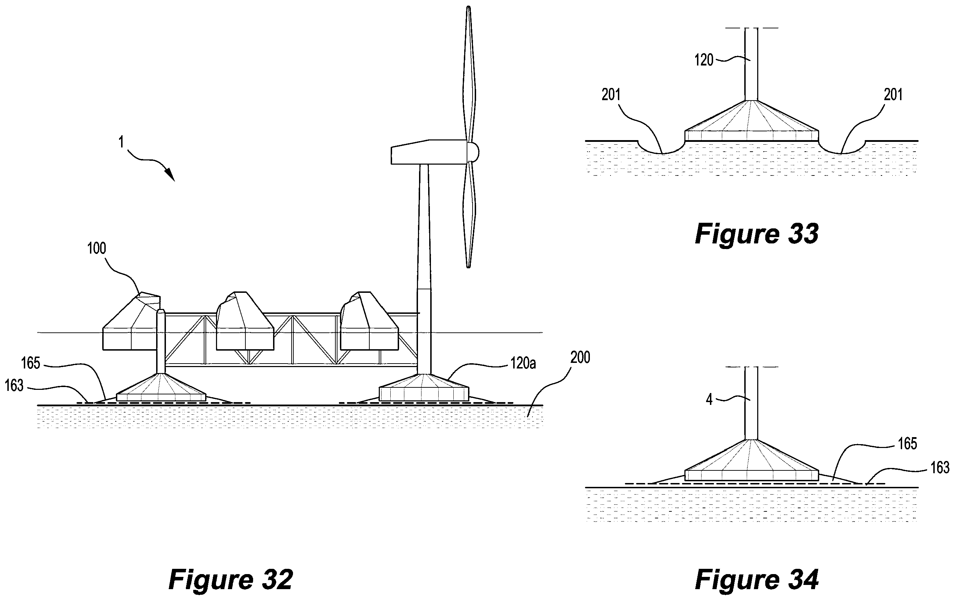

When the membrane 181 is released, the particulate material 186 falls about the base 126 of the supports 120, 120a forming a protective barrier about the supports 120, 120a that significantly reduces the erosion of the supports 120, 120a due to scour. This protective barrier, shown in Figure 32, further prevents the erosion of the sea floor 200 and creation of erosion pits 201 immediately adjacent the supports 120, 120a reducing the likelihood of the platform 1 becoming unstable or uneven.

In Figure 34 a two layers barrier is formed comprising a first filter layer 163 and a second armour layer 165. This dual barrier is formed by using two membranes 181 to form the scour prevention skirt 180. Each membrane 181 is filled with differently graded particulate materials (different sizes of rocks) and the release process is repeated in turn, to provide a first filter layer 163 and subsequently release a second armour layer 165 thereupon.

The armouring layer 165 may further comprise concrete block mattresses, rubber mats, gravel bags, frond mats and other forms of rock protection, as illustrated in Figures 32 and 34.

The protective barrier 163, 165 may advantageously provide a fish aggregating device that can contribute to marine life in the area. The OWCs 100 pose no immediate threat to fish which can be drawn into the cavity 103 of the OWC 100 and forced back out in a wave cycle. The gentle hum of the OWCs 100 has also been shown to attract marine life. Accordingly, the particulate material 186 can be selected to further promote marine and aquatic life in the vicinity of the platform 1.

### A System of Energy Producing Platforms

Referring now to Figures 35 and 36, there is illustrated a plurality of the above described power platforms 1 electrically interconnected by electrical umbilical power transmission lines 195. A primary platform 1A is connected to a main electrical power transmission line 190, which transmits electrical power generated from the plurality of platforms 1, via primary platform 1A to a collection point on shore.

In one embodiment, the platform field layout is based on six platforms 1, with one platform 1 being the primary platform 1A to connect to shore via a 3 to 5 km long main electrical power transmission line 190.

The spacing between platforms 1 is in the order of 0.5 km. In order to eliminate the requirement for a large electrical power transmission line vessel, each platform 1 is pre-installed with the necessary electrical umbilical power transmission lines 195 on a reel, the line 195 having a flotation device (not illustrated) on the ends allowing the lines 195, once deployed, to float on the sea surface. The installation vessel then sets-up platform 1A and recovers the electrical umbilical power transmission lines 195 attached using a small winch. The electrical umbilical power transmission lines 195 is then unwound from platform 1A until it has enough slack to be attached to a subsequent platform 1. The installation vessel then travels towards the subsequent platform 1, laying out the electrical umbilical power transmission lines 195 off the reel on the course as required by the field layout. This operation would be repeated for each island.

In Figure 35, from the primary platform 1A there extends the main electrical power transmission line 190 to the shore, and each of the remainder of the plurality of offshore platforms 1 is electrically connected directly to the main platform 1A by an umbilical power transmission line 195.

In Figure 36 there is illustrated an alternative set-up, whereby the plurality of offshore platforms 1 are connected in series to the primary platform 1A from which the main electrical power transmission line 190 then extends to the collection point on shore.

The energy produced by the power platform 1 can be transmitted for use by additional equipment installed on the platform 1. Accordingly, the power generated by the platform 1 need not be transmitted to another location or to shore. For example, a desalination plant can be installed on the platform 1 and run from the power generated by the platform 1. In this manner, the platform 1 can be set-up and installed to create renewable, sustainable energy at or near the location at which the power will be used.

Advantageously, the present invention facilitates simplified positioning and repositioning of an offshore platform 1, and reduces the environmental impact associated with these tasks, along with the installation of OWCs 100.

In another embodiment of the invention, the device for generating electrical energy from waves is a tidal turbine 101, illustrated in Figure 2A. The tidal turbine 101 is attached to the platform body 2 to depend therefrom. A plurality of tidal turbines 101 can be suspended from the periphery 3 of the platform 1 to increase the amount of electrical energy generated by the platform. The tidal turbines 101 can be configured to extend to the same draft as an OWC 100 or to a lesser or greater draft to draw energy from the flowing water. Flowing water sources will have differing flow rates at different depths. The depth at which the current moves fastest is the optimum location for the tidal turbines 101. The tidal turbines 101 are located below the platform body 2 to access the current, or natural water flow in an area below the platform 1. In some installation locations, a shallower draft enables the platform 1 to be located in areas where the sea depth or estuary depth is relatively shallow. Where the platform 1 is to be installed in an estuary the platform body 2 can be scaled down to have a side length of 20 metres to facilitate installation in the estuary.

Tidal turbines 101 will harness energy from the tidal flow of water through the blades of the turbine 101. This is in contrast to the rise and fall of a wave entering the OWC 100. As such a platform 1 supporting tidal turbines 101 can be employed where water is regularly moving or flowing without a variation in wave height conditions, as well as areas close to shore where waves cause water to flow through and turn the blades of the tidal turbine 101.

It will be appreciated by persons skilled in the art that numerous variations and modifications may be made to the above-described embodiments, without departing from the scope of the invention as set forth and defined by the following claims. The present embodiments are, therefore, to be considered in all respects as illustrative and not restrictive.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

**LEGEND**

| **Ref No.** | **Name** | **Ref No.** | **Name** |
|---|---|---|---|
| **1** | Offshore platform | **123** | Core reinforcements |
| **2** | Body | **124** | Support body |
| **3** | Periphery of body | **126** | Support base |
| **4** | corner column | **127** | Base reinforcements |
| **6** | Boat landing platforms | **127a** | Stiffeners |
| **8** | Walkways | **128** | Ballast Tank |
| **10** | Maintenance platforms | **130** | SHROUD |
| **100** | OWC | **126** | Support base |
| **101** | Tidal turbine | **140** | Turbine Assy |
| **102** | Housing for OWC | **150** | Dock |
| **102a** | Lower portion of housing | | |
| **103** | Cavity | **160** | Barge |
| **104** | Water Opening (inlet/outlet) | **163** | Barrier Filter layer |
| **105** | Base | **165** | Barrier Armour Layer |
| **106** | Air aperture (inlet/outlet) | **160** | Barge |
| **107** | Draft | **170** | Mobile crane |
| **108** | Bi-directional turbine | **180** | Scour Prevention skirt |
| **109** | Braces | **181** | Flexible membrane |
| **110** | Wind Turbine | **182** | Retaining wire |
| | | **184** | Brackets (mounted to 124) |
| **112** | Post/Tower | **186** | Particulate material |
| **113** | Canopy/housing | **190** | Main power transmission Line |
| **114** | Blade | **195** | Umbilical power transmission line |
| **116** | Powertrain - Generator/gbox/drive shaft/brg | **198** | Diver |
| **118** | Spinner | **199** | Person |
| **120** | Secondary Support | | |
| **120a** | Primary support | **200** | Sea Floor |
| **122** | Core of support | **201** | Erosion pit |

## Claims

1. A power platform for generating electricity, the platform comprising a platform body (2) supporting a device (100, 101) for generating electricity from water energy, wherein the power platform has a selectively variable buoyancy to sink the platform in water, the device comprising a plurality of oscillating water columns (100) disposed about the platform body (2) and equidistantly spaced about the platform in a closed loop configuration with a distance of between half to one-and-a-half oscillating water columns (100) spacing therebetween, the platform body (2) being manufactured from a framework to allow the passage of waves through sides and lower portion of the platform body (2).

2. The power platform of claim 1, wherein the selectively variable buoyancy enables floating of the platform to an installation site and ballasting the platform to sit on the sea floor (200) thereby providing a static support for the electricity generation device (100, 101).

3. The power platform of claim 1 or claim 2, wherein the device (100, 101) comprises at least one tidal turbine (101), suspended below the water level, to generate electricity from tidal energy.

4. The power platform of any one of the preceding claims, including a base to which the platform body (2) is mounted, wherein the base comprises a plurality of supports (120, 120a) to support the structure on a sea floor (200) and, optionally, each support (120, 120a) comprises a ballast chamber (128).

5. The power platform of any one of the preceding claims, wherein the selectively variable buoyancy enables floating of the platform at least partially above sea level.

6. The power platform of any one of the preceding claims, wherein the platform comprises a rigid platform body (2) that is capable of being floated, and the device (100, 101) is attached to the rigid platform body (2).

7. The power platform of any one of the preceding claims, wherein the platform further comprises a wind turbine (110).

8. The power platform of any one of the preceding claims, wherein the platform body (2) has a structure that is triangular-shaped.

9. The power platform of any one of the preceding claims, wherein the platform body (2) comprises corner columns (4).

10. The power platform of claim 9, wherein a said corner column (4) is provided at the apex that disperses waves around the platform body (2) when the apex is oriented in the direction of an oncoming wave.

11. The power platform of claim 10, wherein the device (100, 101) for generating electricity from water energy is supported on the platform body (2) at a location spaced from the apex.

## Patentansprüche

1. Energieplattform zum Erzeugen von Elektrizität, wobei die Plattform einen Plattformkörper (2) umfasst, der eine Vorrichtung (100, 101) zum Erzeugen von Elektrizität aus Wasserenergie trägt, wobei die Energieplattform einen selektiv variablen Auftrieb aufweist, um die Plattform in Wasser zu versenken, wobei die Vorrichtung eine Vielzahl von schwingenden Wassersäulen (100) umfasst, die um den Plattformkörper (2) herum angeordnet und in gleichen Abständen um die Plattform herum in einer geschlossenen Schleifenkonfiguration mit einem Abstand einer Strecke zwischen einer halben und eineinhalb schwingenden Wassersäulen (100) beabstandet sind, wobei der Plattformkörper (2) aus einem Rahmenwerk hergestellt ist, um das Durchfließen von Wellen durch die Seiten und den unteren Abschnitt des Plattformkörpers (2) zu ermöglichen.

2. Energieplattform nach Anspruch 1, wobei der selektiv variable Auftrieb ein Schwimmen der Plattform zu einem Installationsort und ein Beballasten der Plattform zum Aufsitzen auf dem Meeresboden (200) ermöglicht, wodurch eine statische Stützung für die Elektrizitätszeugungsvorrichtung (100, 101) bereitgestellt wird.

3. Energieplattform nach Anspruch 1 oder Anspruch 2, wobei die Vorrichtung (100, 101) mindestens eine Gezeitenturbine (101) umfasst, die unterhalb des Wasserspiegels aufgehängt ist, um Elektrizität aus Gezeitenenergie zu erzeugen.

4. Energieplattform nach einem der vorhergehenden Ansprüche, eine Basis enthaltend, an der der Plattformkörper (2) montiert ist, wobei die Basis eine Vielzahl von Stützen (120, 120a) umfasst, um die Struktur auf einem Meeresboden (200) zu stützen, und optional wobei jede Stütze (120, 120a) eine Ballastkammer (128) umfasst.

5. Energieplattform nach einem der vorhergehenden Ansprüche, wobei der selektiv variable Auftrieb ein Schwimmen der Plattform mindestens teilweise über dem Meeresspiegel ermöglicht.

6. Energieplattform nach einem der vorhergehenden Ansprüche, wobei die Plattform einen starren Plattformkörper (2) umfasst, der schwimmfähig ist, und die Vorrichtung (100, 101) an dem starren Plattformkörper (2) angebracht ist.

7. Energieplattform nach einem der vorhergehenden Ansprüche, wobei die Plattform ferner eine Windturbine (110) umfasst.

8. Energieplattform nach einem der vorhergehenden Ansprüche, wobei der Plattformkörper (2) eine Struktur aufweist, die dreieckförmig ist.

9. Energieplattform nach einem der vorhergehenden Ansprüche, wobei der Plattformkörper (2) Ecksäulen (4) umfasst.

10. Energieplattform nach Anspruch 9, wobei eine Ecksäule (4) am Scheitel bereitgestellt ist, die Wellen um den Plattformkörper (2) verteilt, wenn der Scheitel in Richtung einer ankommenden Welle ausgerichtet ist.

11. Energieplattform nach Anspruch 10, wobei die Vorrichtung (100, 101) zum Erzeugen von Elektrizität aus Wasserenergie auf dem Plattformkörper (2) an einer von der Spitze beabstandeten Stelle getragen wird.

## Revendications

1. Plate-forme électrique pour générer de l'électricité, la plate-forme comprenant un corps de plate-forme (2) supportant un dispositif (100, 101) pour générer de l'électricité à partir d'énergie hydraulique, dans laquelle la plate-forme électrique a une flottabilité sélectivement variable pour couler la plate-forme dans l'eau, le dispositif comprenant une pluralité de colonnes d'eau oscillantes (100) disposées autour du corps de plate-forme (2) et espacées de manière équidistante autour de la plate-forme dans une configuration en boucle fermée avec une distance d'espacement comprise entre une demie et une colonne d'eau oscillante (100) et demie entre elles, le corps de plate-forme (2) étant fabriqué à partir d'un cadre pour permettre le passage d'ondes à travers les côtés et la partie inférieure du corps de plate-forme (2).

2. Plate-forme électrique selon la revendication 1, dans laquelle la flottabilité sélectivement variable permet le flottement de la plate-forme vers un site d'installation et le ballastage de la plate-forme pour qu'elle repose sur le fond marin (200) fournissant ainsi un support statique pour le dispositif de génération d'électricité (100, 101).

3. Plate-forme électrique selon la revendication 1 ou la revendication 2, dans laquelle le dispositif (100, 101) comprend au moins une hydrolienne (101), suspendue sous le niveau de l'eau, pour générer de l'électricité à partir de l'énergie marémotrice.

4. Plate-forme électrique selon l'une quelconque des revendications précédentes, comportant une base sur laquelle le corps de plate-forme (2) est monté, dans laquelle la base comprend une pluralité de supports (120, 120a) pour supporter la structure sur un fond marin (200) et, éventuellement, chaque support (120, 120a) comprend une chambre de ballast (128) .

5. Plate-forme électrique selon l'une quelconque des revendications précédentes, dans laquelle la flottabilité sélectivement variable permet le flottement de la plate-forme au moins partiellement au-dessus du niveau de la mer.

6. Plate-forme électrique selon l'une quelconque des revendications précédentes, dans laquelle la plate-forme comprend un corps de plate-forme rigide (2) qui est capable de flotter, et le dispositif (100, 101) est fixé au corps de plate-forme rigide (2).

7. Plate-forme électrique selon l'une quelconque des revendications précédentes, dans laquelle la plate-forme comprend en outre une éolienne (110).

8. Plate-forme électrique selon l'une quelconque des revendications précédentes, dans laquelle le corps de plate-forme (2) a une structure de forme triangulaire.

9. Plate-forme électrique selon l'une quelconque des revendications précédentes, dans laquelle le corps de plate-forme (2) comprend des colonnes d'angle (4).

10. Plate-forme électrique selon la revendication 9, dans laquelle une dite colonne d'angle (4) est prévue au niveau du sommet qui disperse les ondes autour du corps de plate-forme (2) lorsque le sommet est orienté dans la direction d'une onde venant en sens inverse.

11. Plate-forme électrique selon la revendication 10, dans laquelle le dispositif (100, 101) pour générer de l'électricité à partir d'énergie hydraulique est supporté sur le corps de plate-forme (2) au niveau d'un emplacement espacé du sommet.
